# EUROPÄISCHE PATENTANMELDUNG

(11) **EP 0 989 514 A2**
(43) Veröffentlichungstag der Anmeldung: **29.03.2000**
(21) Anmeldenummer: 99118699.0
(22) Anmeldetag: 22.09.1999
(51) Int. Cl.: G06K 19/077

(54) **Chipkarte sowie Verfahren zur Herstellung einer Chipkarte**

(30) Priorität: 22.09.1998 DE 19843462
(71) Anmelder: ODS Landis & Gyr GmbH & Co. KG, 85737 Ismaning (DE)
(72) Erfinder: Schmidt, Frank, Dr., 99891 Seebach (DE)
(74) Vertreter: Grünecker, Kinkeldey, Stockmair & Schwanhäusser Anwaltssozietät

(57) **Zusammenfassung**

Laminierte kontaktlose Chipkarte, wobei in dem Kartenkörper ein Spritzgußkörper untergebracht ist, der zumindest eine Aussparung aufweist, in die ein Chip oder Chipmodul eingesetzt ist und auf dessen Umfang die Leiterschleife aufgezogen ist.

## Beschreibung

Die vorliegende Erfindung bezieht sich auf Chipkarten sowie auf ein Verfahren zur Herstellung von Chipkarten.

Die wohl am meisten verbreitete Art der Chipkartenherstellung besteht in der Montage des Chips auf einen Trägerfilm, der nachfolgenden Kontaktierung des Chips und dem Einschließen des Chips in einen Schutzkörper zur Erzeugung eines Chipmoduls. Dieses Chipmodul wird anschließend mittels eines Laminierprozesses in einen Kartenkörper integriert, wobei bei dem Laminierprozeß mehrere Folienlagen unter Einwirkung von Wärme und Druck zu einem Kartenkörper geformt werden.

Eine weitere häufig verwendete Herstellungsart besteht in der Bereitstellung eines Chipmoduls und dem anschließenden Einkleben dieses Chipmoduls in einen Spritzkartenkörper, wobei der Spritzkartenkörper eine Ausfräsung zur Aufnahme des Chipmoduls aufweist.

Bei der Herstellung von kontaktlosen Chipkarten, d.h. Chipkarten, die in ihrem Inneren eine Leiterschleife als Antenne für die Kommunikation mit einem Leseterminal aufweisen, wird im allgemeinen stets das Laminierverfahren angewendet, wobei die Leiterschleife auf eine mittlere Folie aufgelegt und anschließend von weiteren Folienschichten überdeckt wird, die sich wiederum unter Einfluß von Wärme und Druck zu dem eigentlichen Kartenkörper verbinden.

Nachteilig bei der bisherigen Art der Herstellung kontaktloser Chipkarten ist der relativ große Aufwand zur Erstellung und Einbringung der gewickelten Leiterschleife in den Kartenkörper.

Es ist die Aufgabe der vorliegenden Erfindung, eine Chipkarte sowie ein Herstellungsverfahren anzugeben, durch die insbesondere das Einbringen einer Leiterschleife in den Kartenkörper erleichtert wird.

Diese Aufgabe wird zum einen gelöst durch eine laminierte kontaktlose Chipkarte, bei der im Kartenkörper ein Spritzgußkörper untergebracht ist, der zumindest eine Aussparung aufweist, in die ein Chip oder Chipmodul eingesetzt ist und auf dessen Umfang die Leiterschleife aufgezogen ist.

Zum anderen wird die Aufgabe durch ein Verfahren zur Herstellung von Chipkarten gelöst, die zumindest aus einer Kern- und zwei Deckfolien besteht, welches folgende Schritte aufweist: Herstellen eines vorzugsweise kartenförmigen Kernteils, Erzeugen einer Aussparung in dem Kernteil, Einsetzen eines Chips oder Chipmoduls in die Aussparung des Kernteils, Einbringen des Kernteils zwischen einer oberen und unteren Deckfolie, und Verbinden des Kernteils mit den Deckfolien zu einer Chipkarte mittels eines Formgebungsprozesses.

Das erfindungsgemäße Verfahren dient nicht nur zur Herstellung laminierter kontaktloser Chipkarten, sondern bezieht sich allgemein auf eine neue Art von Produktionstechniken, bei denen Vorteile unterschiedlicher Herstellungstechniken miteinander kombiniert werden können.

Gemäß dem angegebenen Verfahren wird zunächst ein vorzugsweise kartenförmiges Kernteil erstellt, das wiederum vorzugsweise aus einem Spritzgußkörper besteht. In dieses Kernteil werden Aussparungen eingebracht, in die der Chip oder das Chipmodul sowie ggf. weitere elektronische Bauelemente, wie Batterien, Kondensatoren ect. eingebracht werden können. Anschließend wird das Kernteil mittels zumindest einer oberen und einer unteren Deckfolie und unter Einwirkung eines Formgebungsprozesses zu einer fertigen Chipkarte weiterverarbeitet. Vorzugsweise besteht die Weiterverarbeitung in einem Laminierprozeß, so daß Vorteile aus der Chipkartenherstellung mittels Spritzgußkörper mit den Vorteilen eines Laminierprozesses kombiniert werden können.

Insbesondere vorteilhaft an dem erfindungsgemäßen Verfahren ist die Tatsache, daß das Kernteil als Wickelkörper für eine Leiterschleife verwendet werden kann, wobei das Kernteil vorzugsweise Öffnungen aufweist, in die ein Wickelwerkzeug eingreifen kann, um das Kernteil zum Aufwickeln der Leiterschleife drehen zu können.

Zur Unterstützung des Wickelprozesses weist das kartenförmige Kernteil vorzugsweise ein U- oder L-förmiges Umfangsprofil auf, in dem die aufgewickelte Leiterschleife sicher fixiert werden kann.

Ein weiterer wesentlicher Vorteil der Verwendung eines steifen Kernteils besteht in der Möglichkeit, weitere elektronische Bauelemente einfach in die Karte einbringen zu können. Für weitere elektronische Bauelemente werden weitere Aussparungen in das Kernteil gefräst und die entsprechenden elektronischen Bauelemente anschließend vorzugsweise eingeklebt. Bevorzugterweise ist eines der weiteren Bauelemente eine Batterie, wobei zur Erzielung maximaler Bateriekapazität die Aussparung als Durchbruch in dem Kernteil ausgeführt sein kann, um eine Batterie mit maximaler Dicke einsetzen zu können.

Weitere bevorzugte Ausgestaltungen sind Gegenstand der Unteransprüche.

Im folgenden werden bevorzugte Ausführungsformen der vorliegenden Erfindung unter Bezugnahme auf die beiliegenden Zeichnungen näher erläutert. Dabei zeigen die Zeichnungen im einzelnen:
Fig. 1 eine schematische Draufsicht auf eine bevorzugte Ausführungsform der erfindungsgemäßen Chipkarte; und
Fig. 2 eine schematische Querschnittsansicht durch eine bevorzugte Ausführungsform einer erfindungsgemäßen Chipkarte.

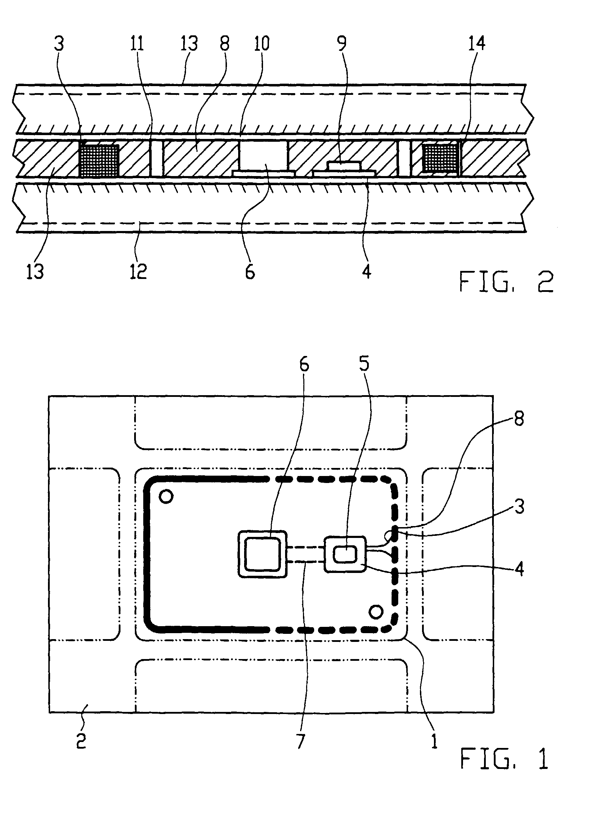

Fig. 1 zeigt in schematischer Weise eine Ausführungsform der erfindungsgemäßen Chipkarte 1 im noch nicht ausgestanzten Zustand aus einem Nutzen 2, umfassend eine Vielzahl gleichzeitig hergestellter Chipkarten. Ersichtlicherweise handelt es sich bei der dargestellten Karte um eine kontaktlose Karte mit Leiterschleife 3, einem Chipmodul 4, enthaltend den Chip 5, und einer Batterie 6. Die Batterie 6 ist über eine gestrichelt angedeutete elektrische Verbindung 7 mit dem Chipmodul 4 verbunden, das wiederum über eine weitere elektrische Verbindung 8 mit der Leiterschleife 3 verbunden ist.

Fig. 2 zeigt in detaillierter Weise den prinzipiellen Aufbau der bevorzugten Ausführungsform. In einem Kernteil 8, welches vorzugsweise aus einem Spritzgußkörper besteht, ist eine Aussparung 9 eingebracht, in die anschließend das Chipmodul 4 eingesetzt wurde. Das Kernteil 8 weist darüber hinaus einen Durchbruch 10 auf, in den die Batterie 6 eingesetzt wurde. Gemäß der vorliegenden Erfindung kann eine beliebige weitere Anzahl von Aussparungen und Durchbrüchen vorgesehen sein, um weitere elektrische Elemente, wie Kondensatoren, Spulen, Spulenkerne, Speicherchips etc. aufzunehmen.

Vorzugsweise erfolgt die Verdrahtung zwischen den einzelnen Bauelementen mittels Leiterbahnen, die auf der Oberfläche des Kernteils bzw. Spritzgußkörpers verlaufen.

Die in den Fig. 1 und 2 dargestellten Durchbrüche 11 dienen der leichteren Herstellung kontaktloser Chipkarten. In die entsprechenden Durchbrüche kann während des Aufwickelns der Leiterschleife 3 eine Wickelwerkzeug eingreifen, um das Kernteil für das Aufwickeln zu drehen. Wie in Fig. 1 angedeutet, befinden sich die Durchbrüche 11 vorzugsweise an diagonalen Ecken des kartenförmigen Kernteils.

Damit das Aufwickeln der Leiterschleife 3 problemlos vonstatten geht, weist das Kernteil 8 vorzugsweise ein U- oder L-förmiges Umfangsprofil auf, in dem der Draht für die Leiterschleife sicher fixiert werden kann. Fig. 2 zeigt zur Illustration auf der rechten Seite ein U-förmiges Profil und auf der linken Seite ein L-förmiges Profil.

Nachdem die elektrischen Bauelemente in das Kernteil 8 eingebracht wurden, das Kernteil mittels eines Wickelwerkzeugs gedreht und mit einer Leiterschleife 3 versehen wurde, wird das so erstellte Zwischenprodukt zwischen eine untere und obere Deckfolie 12 bzw. 13 eingebracht. Vorzugsweise ist zwischen den Deckfolien eine Kernfolie 13 eingebracht, die einen Durchbruch 14 zur Aufnahme des Kernteils mit aufgewickelter Spule aufweist. Vorzugsweise entspricht die Dicke der Kernfolie 13 etwa der Dicke des vorzugsweise kartenförmigen Kernteils 8.

Nachdem ein Aufbau gemäß Fig. 2 erreicht wurde, werden die verschiedenen Folien mittels eines Formgebungsprozesses zu einem festen Kartenkörper verbunden. Vorzugsweise werden hierzu herkömmliche Laminiertechniken verwendet, wobei unter Einwirkung von Wärme und Druck eine dauerhafte Verbindung zwischen den Deckfolien 12 und 13 sowie der Kernfolie 13 und dem Kernteil 8 erreicht wird. Nachdem der Formgebungsprozeß abgeschlossen ist, wird die fertige Chipkarte 1 aus dem Verbund mit den weiteren Karten ausgestanzt.

Vorzugsweise wird mittels dem angegebenen Verfahren eine Chipkarte mit Normabmessungen gefertigt. Ersichtlicherweise weist das Kernteil chipkartenähnliche Proportionen auf und wird zu allen Seiten nur um wenige Millimeter von den Normabmessungen überragt. Typischerweise besteht der Abstand zwischen der Leiterschleife und dem Rand der fertigen Karte nur 1 bis 3, vorzugsweise 2 mm. Bei dieser Herstellungsart besteht die Kernschicht somit aus einer Art Ring, der zwischen die Deckfolien gelegt wird und das Kernteil 8 umrahmt.

Fig. 2 zeigt einen Aufbau mit nur zwei Deckfolien und einer Kernfolie. Selbstverständlich können zu beiden Seiten noch weitere Folien zwischengeschoben werden. Dies bietet sich insbesondere dann an, wenn die elektrischen Bauelemente und insbesondere die Batterie 6 die Dicke der mittigen Kernfolie übersteigt. Darüber hinaus können über die Deckfolien noch Overlay-Folien gelegt werden, die ein leichtes Bedrucken der Karten ermöglichen.

Geht man von der Herstellung einer Normkarte mit einer Dicke von 0,76 ± 0,08 mm aus, so beträgt die Stärke der Zwischenschicht und somit die Stärke des Kernteils 6 vorzugsweise etwa 0,4 bis 0, 5 mm. Entsprechend ist bei einer Verwendung von zwei Deckfolien von einer Deckfolienstärke von etwa 0,15 mm auszugehen.

Das erfindungsgemäße Verfahren eignet sich insbesondere zur Herstellung von kontaktlosen Chipkarten mit großer Reichweite, d.h. mit hoher Wicklungszahl. Aufgrund des Gedankens, daß ein Teil der späteren Karte als Wicklungskörper dient, kann das Wickeln einfach und schnell erfolgen. Neben der Verwendung des erfindungsgemäßen Verfahrens zur Herstellung von großen Normkarten eignet sich das Herstellungsverfahren insbesondere auch zur Erstellung von Minichipkarten.

## Patentansprüche

1. Laminierte kontaktlose Chipkarte, **dadurch gekennzeichnet,** daß in dem Kartenkörper ein Spritzgußkörper untergebracht ist, der zumindest eine Aussparung aufweist, in die ein Chip oder Chipmodul eingesetzt ist und auf dessen Umfang die Leiterschleife aufgezogen ist.

2. Chipkarte nach Anspruch 1, **dadurch gekennzeichnet,** daß der Spritzgußkörper kartenförmig ausgeführt ist.

3. Chipkarte nach Anspruch 1 oder 2, **dadurch gekennzeichnet,** daß der Spritzgußkörper über seinen Umfang ein Profil aufweist, das ein Aufwickeln und Fixieren der Leiterschleife begünstigt.

4. Chipkarte nach Anspruch 3, **dadurch gekennzeichnet,** daß das Profil U- oder L-förmig ausgebildet ist.

5. Chipkarte nach Anspruch 2, **dadurch gekennzeichnet,** daß der kartenförmige Spritzgußkörper mit aufgezogener Leiterschleife annähernd die flächenmäßige Ausdehnung der Chipkarte aufweist und an den Seiten von den Abmessungen der Chipkarte jeweils nur um wenige Millimeter überragt wird.

6. Chipkarte nach einem der vorhergehenden Ansprüche, **dadurch gekennzeichnet,** daß Spritzgußkörper zumindest eine weitere Aussparung aufweist, in die eine flache Batterie eingesetzt ist.

7. Chipkarte nach Anspruch 6, **dadurch gekennzeichnet,** daß die weitere Aussparung als Durchbruch durch den Spritzgußkörper ausgeführt ist.

8. Chipkarte nach einem der vorhergehenden Ansprüche, **dadurch gekennzeichnet,** daß der Spitzgußkörper zwei, vorzugsweise an gegenüberliegenden Seiten des Spritzgußkörpers plazierte, Bohrungen aufweist, in die ein Wickelwerkzeug während des Wickelvorgangs eingreifen kann.

9. Chipkarte nach einem der vorhergehenden Ansprüche, **dadurch gekennzeichnet,** daß der Spritzgußkörper in eine Kernschicht der Karte eingesetzt ist, die von zumindest einer oberen und einer unteren Deckschicht abgeschlossen wird.

10. Chipkarte nach Anspruch 9, **dadurch gekennzeichnet,** daß der Spritzgußkörper in einen Durchbruch der Kernschicht eingesetzt ist.

11. Chipkarte nach einem der vorhergehenden Ansprüche, **dadurch gekennzeichnet,** daß der Spritzgußkörper weitere Aussparungen zur Aufnahme elektronischer Bauelemente, wie Kondensatoren, Spulenkerne, Spulen, Speicherchips etc., aufweist und entsprechende Bauelemente in die Aussparungen eingesetzt sind.

12. Chipkarte nach Anspruch 9, **dadurch gekennzeichnet,** daß auf den Deckschichten jeweils eine Folie aufgeklebt ist.

13. Verfahren zur Herstellung von Chipkarten, bestehend zumindest aus einer Kern- und zwei Deckschichten mit folgenden Schritten:
Herstellen eines vorzugsweise kartenförmigen Kernteils,
Erzeugen einer Aussparung in dem Kernteil,
Einsetzen eines Chips oder Chipmoduls in die Aussparung des Kernteils,
Einbringen des Kernteils zwischen eine obere und untere Deckschicht, und
Verbinden des Kernteils mit den Deckschichten einer Chipkarte mittels eines Formgebungsprozesses.

14. Verfahren nach Anspruch 13, **dadurch gekennzeichnet,** daß das Kernteil in eine Kernfolie eingesetzt wird und zusammen mit dieser die Kernschicht bildet.

15. Verfahren nach Anspruch 14, **dadurch gekennzeichnet,** daß die Kernfolie etwa die Dicke des Kernteils aufweist.

16. Verfahren nach Anspruch 13 oder 14, **dadurch gekennzeichnet,** daß das Kernteil annähernd die flächenmäßige Ausdehnung der Chipkarte aufweist und seitlich jeweils nur wenige Millimeter durch die Kernfolie überragt wird.

17. Verfahren nach einem der Ansprüche 13 bis 16, **dadurch gekennzeichnet,** daß der Formgebungsprozeß ein Laminierprozeß ist.

18. Verfahren nach einem der Ansprüche 13 bis 17, **dadurch gekennzeichnet,** daß das Kernteil durch ein Spritzgußteil gebildet wird.

19. Verfahren nach einem der Ansprüche 13 bis 18, **dadurch gekennzeichnet,** daß in das Kernteil zumindest eine weitere Aussparung eingebracht wird zur Aufnahme eines weiteren elektronischen Bauteils, vorzugsweise einer Batterie.

20. Verfahren nach einem der Ansprüche 13 bis 19, **dadurch gekennzeichnet,** daß Klebeschichten zumindest zwischen den Deckschichten und dem Kernteil eingebracht werden.

21. Verfahren nach einem der Ansprüche 13 bis 20, **dadurch gekennzeichnet,** daß vor oder nach dem Einbringen der elektrischen Komponenten in das Kernteil auf dessen Umfang eine Leiterschleife aufgewickelt wird zur Erzeugung einer kontaktlosen Chipkarte.

22. Verfahren nach Anspruch 21, **dadurch gekennzeichnet,** daß in dem Kernteil vor Beginn des Wickelns Bohrungen erzeugt werden, in die das Wickelwerkzeug während des Wickelvorgangs eingreift.

23. Verfahren nach Anspruch 22, **dadurch gekennzeichnet,** daß das Kernteil mit einem U- oder L-förmigen Umfangsprofil ausgeführt wird und der die Leiterschleifen bildende Draht in dieses Profil eingewickelt wird.

24. Verfahren nach einem der Ansprüche 12 bis 23, **dadurch gekennzeichnet,** daß elektrische Verbindungen zwischen elektrischen Bauelementen, die in das Kernteil eingesetzt sind, auf dessen Oberfläche verlaufend ausgeführt werden.
